# EUROPÄISCHE PATENTSCHRIFT

(11) **EP 3 279 543 B1**
(45) Veröffentlichungstag und Bekanntmachung des Hinweises auf die Patenterteilung: **27.02.2019**
(21) Anmeldenummer: 16306008.0
(22) Anmeldetag: 03.08.2016
(51) Int. Cl.: F16L 59/065, F16L 59/14

(54) **VERFAHREN ZUM BETREIBEN EINER ROHRLEITUNG**
METHOD FOR OPERATING A PIPELINE
PROCEDE DE FONCTIONNEMENT D'UNE CONDUITE

(43) Veröffentlichungstag der Anmeldung: 07.02.2018
(73) Patentinhaber: Nexans, 92400 Courbevoie (FR)
(72) Erfinder: SOIKA, Rainer, 30559 Hannover (DE); SCHULZ, Holger, 30165 Hannover (DE); WEBER, Patrick, 30449 Hannover (DE)
(74) Vertreter: Lenne, Laurence

(56) Entgegenhaltungen:
- CN-A- 103 256 440
- US-A1- 2011 005 303
- US-B1- 8 410 947

## Beschreibung

Die Erfindung bezieht sich auf ein Verfahren zum Betreiben einer dem Transport eines gekühlten Mediums dienenden Rohrleitung gemäß dem Patentanspruch.

Eine bei diesem Verfahren einzusetzende Rohrleitung dient beispielsweise zum Transport von gekühlten, gasförmigen oder flüssigen Medien. Die im Zwischenraum zwischen den beiden Rohren angebrachte Isolierung ist als Vakuumisolierung ein Schirm für das Innere der Rohrleitung gegen von außen auf dieselbe auftreffende Wärme. Das Vakuum zwischen den beiden Rohren der Rohrleitung hat typischer Weise beispielsweise einen Druck von 10⁻⁵ bar. Die Wirksamkeit der Vakuumisolierung als Schirm wird dann verschlechtert und im Extremfall aufgehoben, wenn der Druck des Vakuums beispielsweise auf einen Wert von 10⁻² bar oder höher ansteigt. Das durch die Rohrleitung zu transportierende Medium ist dann nicht mehr wirksam vor Wärme und der damit verbundenen Erwärmung geschützt. Seine Eigenschaften werden so verändert, dass es beispielsweise als Kühlmittel nicht mehr brauchbar ist. Besonders problematisch ist dieser Sachverhalt dann, wenn es sich bei dem zu transportierenden Medien um ein leicht entzündbares Medium handelt.

Aus der US 8,410,947 B1 geht ein System hervor, mit dem ein Leck in einer Rohrleitung festgestellt werden kann, durch welche eine unter Druck stehende Flüssigkeit hindurchgeleitet wird. Sie wird der Rohrleitung über ein Ventil zugeführt. Um die Rohrleitung herum ist mit Abstand zu derselben ein Gehäuse angeordnet, das mit einem elektrischen Schalter gekoppelt ist. Im Falle einer Beschädigung der Rohrleitung gelangt unter Druck stehende Flüssigkeit in den Raum zwischen Rohrleitung und Gehäuse. Das Gehäuse wird dadurch verformt, was sich auf den Schalter auswirkt. Durch den Schalter wird daraufhin ein Verstellglied betätigt, durch welches das Ventil geschlossen wird.

Die CN 103 256 440 A beschreibt eine flexible Verbindungsleitung zum Einsatz auf dem Gebiet Solarwärme. In der Verbindungsleitung wird ein erwärmtes Medium geführt. In der aus zwei konzentrischen, flexiblen Rohren bestehenden Verbindungsleitung sind mehrere Temperatursensoren angebracht, die bei einer Änderung der Temperatur des Wärmeträgers einen Alarm auslösen.

Der Erfindung liegt die Aufgabe zugrunde, das eingangs geschilderte Verfahren so zu gestalten, dass ein unzulässiger Anstieg des Drucks im Vakuum sehr schnell festgestellt werden kann, so dass Schutzmaßnahmen durchgeführt werden können.

Diese Aufgabe wird entsprechend den Merkmalen des Patentanspruchs gelöst.

Im Falle einer Beschädigung zumindest eines der Rohre der Rohrleitung bricht das Vakuum im Zwischenraum zwischen den beiden Rohren der Rohrleitung mehr oder weniger schnell zusammen. Die Folge ist eine Abkühlung auch des äußeren Rohres der Rohrleitung. Das wird vom Temperatursensor festgestellt, welcher die von demselben gemessene Temperatur dem Regler ständig als Istwert aufgibt. Wenn die Temperatur am äußeren Rohr der Rohrleitung unter einen im Regler gespeicherten Grenzwert der Temperatur fällt, dann wird durch den Regler veranlaßt, dass die weitere Zufuhr des zu übertragenden gekühlten Mediums an die Rohrleitung abgebrochen wird. Die Rohrleitung kann dann repariert und anschließend wieder in Betrieb genommen werden.

Der im Regler eingestellte Grenzwert der Temperatur ist veränderbar. Er kann mit Vorteil auf eine Temperatur eingestellt werden, die zwischen 20 °C und 40 °C unterhalb der im Bereich der Rohrleitung herrschenden Umgebungstemperatur liegt. Der Grenzwert der Temperatur kann auch in Abhängigkeit von der Art und insbesondere von der Temperatur des zu transportierenden gekühlten Mediums eingestellt werden.

Um den guten wärmeleitenden Kontakt zwischen dem äußeren Rohr der Rohrleitung und dem Temperatursensor sicherzustellen, wird zwischen den beiden Bauteilen eine gut wärmeleitende Masse angebracht.

Über dem Temperatursensor wird außerdem eine Abdeckung angeordnet, welche denselben gegenüber einer außerhalb der Rohrleitung vorhandenen Wärmequelle schützt.

Das Verfahren nach der Erfindung wird anhand der Zeichnungen als Ausführungsbeispiel erläutert.

Es zeigen:
Fig. 1 schematisch eine Anordnung zum Durchführen des Verfahrens nach der Erfindung.
Fig. 2 einen Schnitt durch Fig. 1 längs der Linie II - II in vergrößerter Darstellung.
Fig. 3 eine Einzelheit von Fig. 1 in weiter vergrößerter Darstellung.

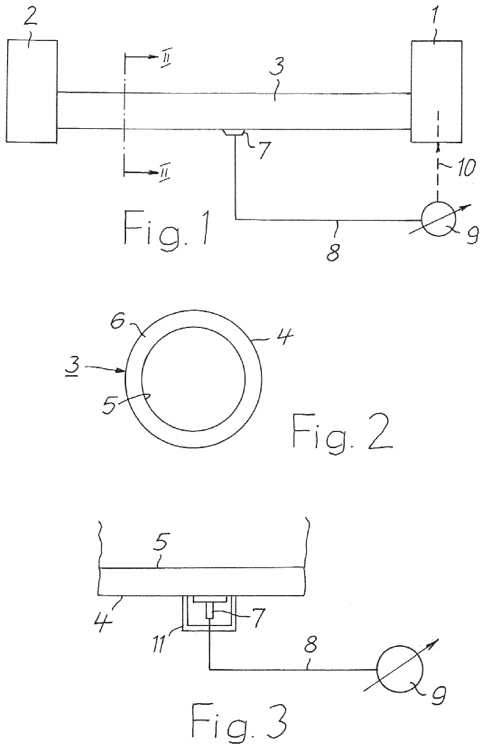

In Fig. 1 ist schematisch eine Übertragungsstrecke für ein gekühltes Medium zwischen zwei Endstellen 1 und 2 dargestellt. "Gekühltes Medium" ist beispielsweise ein natürliches Gas, Stickstoff oder Helium, jeweils in flüssigem Zustand. Das Medium wird mit Vorteil mit einer unter -160 °C liegenden Temperatur übertragen. Zwischen den beiden Endstellen 1 und 2 ist eine Rohrleitung 3 angeordnet, durch welche das gekühlte Medium geleitet wird. Die Endstelle 1 kann beispielsweise alle Bauteile enthalten, die zur Erzeugung eines gekühlten Mediums und zu dessen Einleitung in die Rohrleitung 3 erforderlich sind. In der Endstelle 2 kann mindestens ein Aggregat vorhanden sein, das durch das von der Rohrleitung 3 transportierte gekühlte Medium gekühlt werden soll. Diese in den Endstellen 1 und 2 vorhandenen Bauteile und Aggregate sind grundsätzlich bekannt. Es wird daher nicht genauer auf dieselben eingegangen.

Die Rohrleitung 3 besteht aus zwei konzentrisch und mit Abstand zueinander angeordneten Rohren 4 und 5 aus Metall, vorzugsweise aus Edelstahl. Sie können zur Verbesserung ihrer Biegbarkeit quer zu ihrer Längsrichtung gewellt sein, und zwar entweder wendelförmig oder ringförmig. Im Zwischenraum 6 zwischen den beiden Rohren 4 und 5 sind eine Abstandshalterung und eine Isolierung angebracht, die beide grundsätzlich bekannt und daher nicht mit dargestellt sind. Der Zwischenraum 6 ist evakuiert mit einem Druck von beispielsweise 10⁻⁵ bar.

Am äußeren Rohr 4 der Rohrleitung 3 ist außen mindestens ein Temperatursensor 7 angebracht, mit gutem wärmeleitenden Kontakt zur Oberfläche des Rohres 4. Es können auch zwei oder mehr Temperatursensoren mit Abstand zueinander im Verlauf der Rohrleitung 3 angeordnet werden. Da aber grundsätzlich ein einziger Temperatursensor 7 ausreicht, wird im Folgenden nur ein Temperatursensor berücksichtigt. Um den guten wärmeleitenden Kontakt zwischen dem Temperatursensor 7 und dem äußeren Rohr 4 der Rohrleitung 3 sicherzustellen bzw. zu verbessern, wird zwischen dem Rohr 4 und dem Temperatursensor 7 eine gut wärmeleitende Masse angebracht, bei der es sich um eine handelsübliche Wärmeleitpaste handeln kann.

Der Temperatursensor 7 ist über eine Leitung 8 mit einem Regler 9 verbunden. Der Regler 9 seinerseits ist über eine Leitung 10 an ein Bauteil der Endstelle 1 angeschlossen, das für die Einleitung des gekühlten Mediums in die Rohrleitung 3 maßgeblich ist. Die Leitungen 8 und 10 können elektrische und/oder optische Leiter enthalten, die zur Übertragung von Meßwerten, welche den vom Temperatursensor 7 gemessenen Temperaturen entsprechen, einerseits und von Signalen des Reglers 9 andererseits geeignet sind.

Zum Schutz des Temperatursensors 7 gegenüber der in der Umgebung der Rohrleitung 3 vorhandenen Wärme und insbesondere gegenüber einer außerhalb der Rohrleitung 3 befindlichen Wärmequelle wird über dem Temperatursensor 7 eine Abdeckung 11 angebracht. Die Abdeckung 11 stellt sicher, dass die vom Temperatursensor 7 zum Regler 9 übertragenen Meßwerte der Temperatur nicht durch äußere Einflüsse verfälscht werden.

Das Verfahren nach der Erfindung wird beispielsweise wie folgt durchgeführt:
Eine grundsätzlich gemäß Fig. 1 aufgebaute Übertragungsstrecke für ein gekühltes Medium wird so weit fertiggestellt, dass sie in Betrieb genommen werden kann. Dazu wird auch der Temperatursensor 7 an einer geeigneten Stelle im Verlauf der Rohrleitung 3 montiert, und zwar so, dass eine gut wärmeleitende Verbindung zwischen der Oberfläche des äußeren Rohres 4 der Rohrleitung 3 und dem Temperatursensor 7 besteht. Dazu kann zunächst ein mit einem Gewindeteil ausgerüsteter Halter auf dem Rohr 4 befestigt werden, beispielsweise durch Schweißen. Der Temperatursensor 7 kann dann auf das Gewindeteil des Halters aufgeschraubt oder in dasselbe eingeschraubt werden.

Um den Kontakt zwischen dem Temperatursensor 7 und dem Rohr 4 weiter zu verbessern, wird zunächst die gut wärmeleitende Masse auf dem Rohr 4 bzw. auf oder in dem Halter angebracht. Der Temperatursensor 7 wird mittels der Leitung 8 mit dem Regler 9 verbunden und der Regler 9 wird mittels der Leitung 10 an ein geeignetes Bauteil in der Endstelle 1 angeschlossen. Auch die Abdeckung 11 wird über dem Temperatursensor 7 montiert.

Nach Inbetriebnahme der Übertragungsstrecke liefert der Temperatursensor 7 regelmäßig Meßwerte der von ihm gemessenen Temperatur an den Regler 9. Solange die Temperatur dieser Meßwerte oberhalb einer am Regler 9 eingestellten Grenztemperatur liegt, kann die Übertragungsstrecke ohne Änderungen weiterbetrieben werden. Wenn vom Temperatursensor 7 ein Meßwert übertragen wird, dessen Temperatur niedriger als die Grenztemperatur ist, dann veranlaßt der Regler 9 direkt den Abbruch der Zufuhr des Kühlmittels an die Rohrleitung 3.

## Patentansprüche

1. Verfahren zum Betreiben einer dem Transport eines gekühlten Mediums dienenden Rohrleitung, die zwei mit Abstand koaxial zueinander angeordnete Rohre aus Metall aufweist, bei welchem im Zwischenraum zwischen den beiden Rohren eine Abstandshalterung und eine Isolierung angeordnet werden und bei welchem in dem Zwischenraum ein Vakuum mit einem vorgegebenen Druck erzeugt und aufrechterhalten wird, wobei auf der äußeren Oberfläche des außen liegenden Rohres (4) der Rohrleitung (3) mindestens ein Temperatursensor (7) mit gutem wärmeleitenden Kontakt zu dem Rohr (4) angeordnet wird, der mit einem elektronischen Regler (9) verbunden wird, dem die vom Temperatursensor (7) gemessene Temperatur als Istwert aufgegeben wird, und zwischen dem Temperatursensor (7) und dem äußeren Rohr (4) der Rohrleitung (3) eine gut wärmeleitende Masse angebracht wird, und über dem Temperatursensor (7) zum Schutz gegenüber einer außerhalb der Rohrleitung (3) befindlichen Wärmequelle eine Abdeckung (11) angebracht wird und die Zufuhr des gekühlten Mediums zur Rohrleitung (3) durch ein Signal des Reglers (9) abgebrochen wird, wenn die vom Temperatursensor (7) gemessene und zum Regler (9) übertragene Temperatur einen im Regler (9) gespeicherten Grenzwert der Temperatur unterschreitet.

## Claims

1. A method for operating a pipeline serving for the transport of a cooled medium, which pipeline has two pipes made of metal arranged at a distance coaxially relative to one another, in which in the space between the two pipes a distance retainer and an insulation are arranged and in which in the space a vacuum is generated and maintained with a predetermined pressure, wherein on the outer surface of the pipe (4) located on the outside of the pipeline (3) at least one temperature sensor (7) is arranged with good heat-conducting contact with the pipe (4), which is connected with an electronic controller (9), to which the temperature measured by the temperature sensor (7) is given as the actual value, and between the temperature sensor (7) and the outer pipe (4) of the pipeline (3) a good heat-conducting mass is applied, and a cover (11) is applied over the temperature sensor (7) for protection against a heat source located outside of the pipeline (3) and the supply of the cooled medium to the pipeline (3) is interrupted by a signal of the controller (9), if the temperature measured by the temperature sensor (7) and transmitted to the controller (9) falls below a limit value of the temperature stored in the controller (9).

## Revendications

1. Procédé pour l'exploitation d'une conduite tubulaire servant au transport d'un fluide refroidi, qui comprend deux tubes métalliques disposés de manière coaxiale, avec une certaine distance entre eux, dans lequel, dans l'espace intermédiaire entre les deux tubes, sont disposées une entretoise et une isolation et dans lequel, dans l'espace intermédiaire, un vide avec une pression prédéterminée est généré et maintenu, moyennant quoi, sur la surface externe du tube externe (4) de la conduite tubulaire (3) est disposé au moins un capteur de température (7) avec un bon contact de conduction thermique avec le tube (4), qui est relié avec un régulateur électronique (9), auquel est transmis, en tant que valeur effective, la température mesurée par le capteur de température (7), et
entre le capteur de température (7) et le tube externe (4) de la conduite tubulaire (3) est disposée une masse avec une bonne conduction thermique et
au-dessus du capteur de température (7), pour une protection contre une source de chaleur se trouvant à l'extérieur de la conduite tubulaire (3), est disposée un couvercle (11) et
l'introduction du fluide refroidi dans la conduite tubulaire (3) est interrompue par un signal du régulateur (9) lorsque la température mesurée par le capteur de température (7) et transmise au régulateur (9) passe en dessous d'un valeur limite de température enregistrée dans le régulateur (9).
